# EUROPEAN PATENT APPLICATION

(11) **EP 4 671 207 A1**
(43) Date of publication of application: **31.12.2025**
(21) Application number: 23923315.8
(22) Date of filing: 22.02.2023
(51) Int. Cl.: C01B 32/19, B82Y 30/00, B82Y 40/00, B22F 1/054, C08L 63/00

(54) **TWO-DIMENSIONAL METAL NANOSHEETS, PREPARATION METHOD THEREFOR, AND THERMAL INTERFACE MATERIAL**

(71) Applicant: Qianwan Institute, Ningbo Institute of Materials Technology and Engineering, Ningbo, Zhejiang 315336 (CN); Ningbo Institute of Materials Technology & Engineering, Chinese Academy of Sciences, Ningbo, Zhejiang 315201 (CN)
(72) Inventor: DAI, Wen, Ningbo, Zhejiang 315201 (CN); CHEN, Lu, Ningbo, Zhejiang 315201 (CN); LIN, Zhengde, Ningbo, Zhejiang 315201 (CN); JIANG, Nan, Ningbo, Zhejiang 315201 (CN); YAN, Qingwei, Ningbo, Zhejiang 315201 (CN)
(74) Representative: Bayramoglu et al.
(86) International application number: PCT/CN2023/077703
(87) International publication number: WO 2024/174133

(57) **Abstract**

The present application discloses a two-dimensional metal nanosheet, its preparation method and thermal interface material, belonging to the field of thermally conductive metal fillers. The method for preparing the two-dimensional metal nanosheet includes the following steps: S1. a mixture containing a nano metal foil and an auxiliary substance is crushed to obtain a dispersion; S2. The present application utilizes a high-purity metal foil with a nanoscale thickness in contact with a brittle substance that is easily soluble or easily etched in a liquid environment. Through high-speed mechanical crushing, the two-dimensional metal nanosheet with the same nanoscale thickness can be obtained. The top-down preparation method makes the prepared two-dimensional metal nanosheet free of obvious lattice defects and impurities, and inherits the high intrinsic properties of the original metal film. When it is applied in the field of thermal conductive fillers, the prepared thermal interface material has high thermal conductivity.

## Description

### Technical Field

The present application relates to a two-dimensional metal nanosheet and a preparation method thereof and a thermal interface material, belonging to the field of thermal conductive metal fillers.

### Background

With the advent of the intelligent era, the high integration and high power of electronic components have raised higher requirements for heat dissipation. If the heat is not discharged in time, it will not only reduce the working efficiency of the device, but also affect its stability, reliability and life. In the heat dissipation process, the weak link is the interfacial heat transfer. In order to solve the interface heat transfer problem, the concept of thermal interface materials has been introduced. Thermal interface materials can be classified into solid and liquid based on their construction status. Liquid thermal interface materials are not suitable for enhancing thermal conductivity by constructing thermal conduction pathways; they can only improve thermal conductivity through simple blending with high thermal conductivity fillers.

The thermal conductivity of metal is isotropic, suitable for liquid operating environments, and the sheet shape is conducive to constructing efficient thermal conduction pathways.

Currently, the production of two-dimensional metal nanosheets mainly employs bottom-up methods (such as chemical synthesis, vapor deposition, electrochemical reduction, etc.), resulting in synthesized metal nanosheets containing impurities and lattice defects, making their thermal conductivity only 65% of the intrinsic thermal conductivity, which seriously restricts the application of metal nanosheets in thermal conductivity. Therefore, it is necessary to study methods for preparing metal fillers with high intrinsic properties.

### Summary of The Invention

According to the first aspect of the present application, a method for preparing a two-dimensional metal nanosheet is provided. The two-dimensional metal nanosheet produced by this method exhibit no significant lattice defects or impurities, inheriting the high intrinsic properties of the original metal film. This preparation method is simple, efficient, and environmentally friendly with no pollution.

The method for preparing a two-dimensional metal nanosheet includes the following steps:
S1. a mixture containing a nano metal foil and an auxiliary substance is crushed to obtain a dispersion;
S2. after mixing a material containing the dispersion and a solvent, a solid-liquid separation is performed to obtain the two-dimensional metal nanosheet.

Optionally, in step S1, a thickness of the nano metal foil is in a range from 30 nm to 4000 nm.

Optionally, the thickness of the nano metal foil is in a range from 50 nm to 300 nm.

Optionally, the thickness of the nano metal foil is independently selected from any value among 30 nm, 50 nm, 70 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 1000 nm, 1500 nm, 2000 nm, 2500 nm, 3000 nm, 3500 nm, 4000 nm, or any range between two values.

Optionally, in step S1, the nano metal foil is at least one selected from gold foil, silver foil, copper foil and aluminum foil.

Optionally, in step S1, the auxiliary substance is easily soluble and/or easily etched in a liquid environment.

Optionally, in step S1, the auxiliary substance is a hard substrate or a brittle substance.

Optionally, the auxiliary substance is at least one selected from sugar, salt and ceramic.

Optionally, in step S1, a mass ratio of the nano metal foil to the auxiliary substance is in a range from 0.01 to 0.1.

Optionally, the mass ratio of the nano metal foil to the auxiliary substance is independently selected from any value among 0.01, 0.02, 0.03, 0.04, 0.05, 0.06, 0.07, 0.08, 0.09, 0.1, or any range between two values.

Optionally, in step S1, the crushing is carried out in a wall breaking machine, a mixer, or an ultrasonic machine.

Optionally, the crushing conditions are as follows:
crushing power is in a range from 600 W to 1000 W;
crushing time is in a range from 20 min to 60 min.

Optionally, in step S2, the solvent is at least one selected from water, ethanol, dimethyl sulfoxide, and acetone.

Optionally, in step S2, the dispersion and the solvent are mixed and then crushed again.

According to a second aspect of the present application, a two-dimensional metal nanosheet is provided.

A lateral size of the two-dimensional metal nanosheet is in a range from 2 µm to 100 µm.

According to a third aspect of the present application, a thermal interface material is provided. The thermal interface material has high thermal conductivity.

The thermal interface material includes a two-dimensional metal nanosheet and a matrix;
the two-dimensional metal nanosheet is selected from the two-dimensional metal nanosheet obtained by the above-mentioned preparation method and/or the above-mentioned two-dimensional metal nanosheet.

According to a fourth aspect of the present application, a method for preparing the above-mentioned thermal interface material is provided.

The method for preparing the thermal interface material, including the following steps:
the thermal interface material is obtained by blending a material containing the two-dimensional metal nanosheet and a matrix.

Optionally, the matrix is a polymer.

Optionally, the polymer is at least one selected from epoxy resin, silicone rubber and polyolefin.

Optionally, a volume ratio of the two-dimensional metal nanosheet to the substrate is in a range from 15 to 25.

Optionally, the blending conditions are as follows:
blending temperature is in a range from 60 °C to 100 °C;
blending time is in a range from 200 min to 400 min.

Optionally, a curing agent is added after the two-dimensional metal nanosheet is blended with the polymer.

According to one embodiment of the present application, the initial material of the two-dimensional metal nanosheet is a metal film with a thickness of nanometer level, optionally gold, silver, copper, aluminum, etc.

The two-dimensional metal nanosheet is a metal, optionally gold, silver, copper, aluminum, etc.

The auxiliary substance for crushing is a substance that is easily soluble or easily etched in a liquid phase environment, optionally salt, sugar, ceramics, etc.

A machine with a crushing function can be optionally a wall breaking machine, a mixer, an ultrasonic machine, etc.

The matrix of the thermal interface material is a polymer, and the options include epoxy resin, silicone rubber, polyolefins, etc.

The preparation method of the two-dimensional metal nanosheet is as follows:
(a) contacting a metal film having a nanoscale thickness with an auxiliary substance that is easily soluble or easily etched in a liquid environment;
(b) subjecting the mixture of the two to a combined action with a machine having a crushing function;
(c) controlling the time and power of the crushing machine to obtain the two-dimensional metal nanosheet of different sizes with the same thickness;
(d) after the crushing is complete, adding a liquid, which may be deionized water, ethanol, etc., to dissolve the easily soluble substance;
(e) performing solid-liquid separation and washing, optionally by filtration, centrifugation, etc., to obtain the pure two-dimensional metal nanosheet;
the preparation method of the thermal interface material is as follows:
(a) blending the two-dimensional metal nanosheet with the polymer;
(b) adding a curing agent or not adding a curing agent to prepare the thermal interface material.

The beneficial effects of the present application include:
1) The preparation method of the two-dimensional metal nanosheet provided in the present application utilizes a high-purity metal foil with a nanoscale thickness in contact with a brittle substance that is easily soluble or easily etched in a liquid environment. Through high-speed mechanical crushing, the two-dimensional metal nanosheet with the same nanoscale thickness can be obtained; and the lateral size of the two-dimensional metal nanosheet can be controlled by controlling the power and time of the crushing process. The top-down preparation method makes the prepared two-dimensional metal nanosheet free of obvious lattice defects and impurities, and inherits the high intrinsic properties of the original metal film; the entire process of preparing the two-dimensional metal nanosheet is simple, efficient, environmentally friendly and pollution-free.
2) The two-dimensional metal nanosheet provided in the present application has no obvious lattice defects and impurities, inherits the high intrinsic properties of the original metal film; and when it is applied in the field of thermal conductive fillers, the prepared thermal interface material has high thermal conductivity.

### Description of The Figures

Figure 1 is a schematic diagram of the crushing process in Examples of the present application.
Figure 2 is an electron microscope image of the two-dimensional silver nanosheet in Example 1 of the present application, with a scale bar of 100 µm.
Figure 3 is an electron microscope image of the two-dimensional silver nanosheet in Example 2 of the present application, with a scale bar of 50.0 µm.
Figure 4 is an electron microscope image of the two-dimensional copper nanosheet in Example 3 of the present application, with a scale bar of 50.0 µm.
Figure 5 is an electron microscope image of the two-dimensional aluminum nanosheet in Example 4 of the present application, with a scale bar of 50.0 µm.
Figure 6 is a schematic diagram of a solid composite material obtained after curing the two-dimensional silver nanosheet in epoxy resin in Example 5 of the present application.

### Detailed Description of the Embodiment

The present application is described in detail below with reference to examples, but the present application is not limited to these examples.

Unless otherwise specified, the raw materials and crushing machines in the examples of the present application were all purchased through commercial channels.

The testing method for thermal conductivity is as follows:
using a laser thermal conductivity meter according to the ASTM E1461 standard.

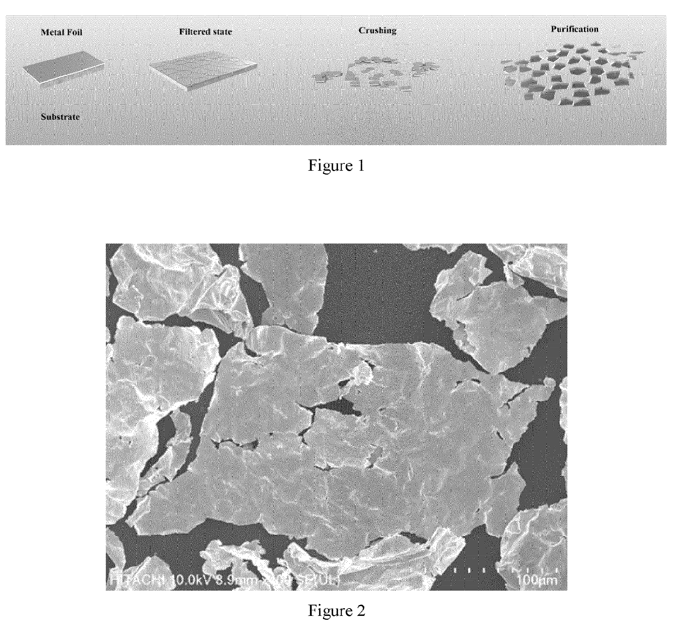

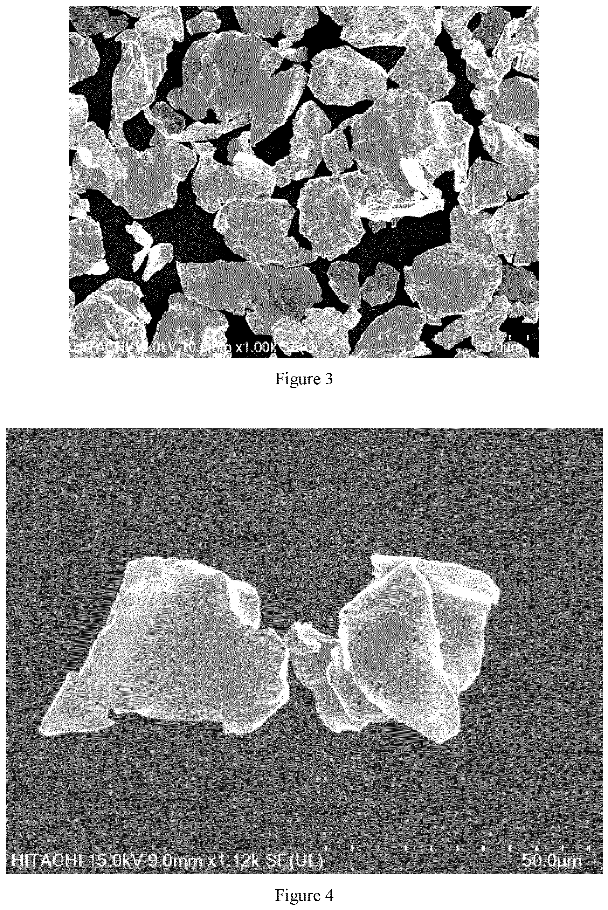

The preparation method in the present application can be used to synthesize different metal nanosheets, as shown in Figure 1:
contacting the metal foil with a hard substrate or brittle material, optionally maltose board or white sugar;
placing the combination of metal foil and maltose board or white sugar into a crusher, optionally a blender;
coordinated using fruit and vegetable button with soy milk keys and controlling time;
washing the obtained solid-liquid mixture clean using a separation device, optionally a suction filtration device;
observing the obtained two-dimensional metal sheet using a scanning electron microscope: Germany Zeiss G300 as shown in Figures 2, 3, 4, and 5;
mixing the obtained two-dimensional metal sheet, such as silver sheets, with a polymer;
the polymer can be optionally epoxy resin;
the mixing equipment is a high-speed agitator, and the optional mixer is FlackTek, Inc, SpeedMixer DAC 150.1 FVZ-K;
referring to Figures 2 and 3, in this example, two-dimensional metal nanosheets of different sizes are obtained by different crushing methods and crushing times.

### Example 1

1.6 g of silver foil with a thickness of 200 nm was contacted with 18 g of white sugar, and the combination was poured into a wall-breaking machine and crushed for 5 times, each time for 80 s with fruit and vegetable button. 40 ml of deionized water was added to dissolve the sugar, and the obtained suspension was poured into a suction filtration bottle, continuously filtered, washed, and dried to obtain a pure two-dimensional silver nanosheet, as shown in Figure 2. It can be seen that the surface of the two-dimensional silver nanosheet is pure, without obvious impurities, and its morphology retains the characteristics of the original silver film in a flaky form.

### Example 2

1.6 g of silver foil with a thickness of 200 nm was contacted with 18 g of white sugar, and the combination was poured into a wall-breaking machine, and crushed for 5 times, each time for 80 s with fruit and vegetable button. 40 ml of deionized water was added to dissolve the sugar, and the obtained suspension was crushed again with fruit and vegetable button for 5 times, each time for 120 s, and then crushed again with soy milk button once for 36 min. The obtained suspension was poured into a suction filtration bottle, continuously filtered, washed, and dried to obtain a pure two-dimensional silver nanosheet, as shown in Figure 3. It can be seen that the surface of the two-dimensional silver nanosheets is pure without obvious impurities, and the morphology retains the characteristics of the original silver film in a flaky form. The lateral size distribution is relatively uniform, and the average lateral size is 21.8 µm.

### Example 3

0.8 g of copper foil with a thickness of 340 nm was contacted with 26 g of white sugar, and the combination was poured into a wall-breaking machine, and crushed for 5 times, each time for 80 s with fruit and vegetable button. 40 ml of deionized water was added to dissolve the sugar, and the obtained suspension was crushed again with fruit and vegetable button for 5 times, each time for 120 s, and then crushed again with soy milk button once for 36 min. The obtained suspension was poured into a suction filtration bottle, and was continuously filtered, washed, and dried to obtain a pure two-dimensional copper nanosheet, as shown in Figure 4. It can be seen that the surface of the two-dimensional copper nanosheet is pure, without obvious impurities, the lateral size distribution is relatively uniform, and the morphology retains the characteristics of the original copper film in a flaky form, with an average lateral size of 56 µm.

### Example 4

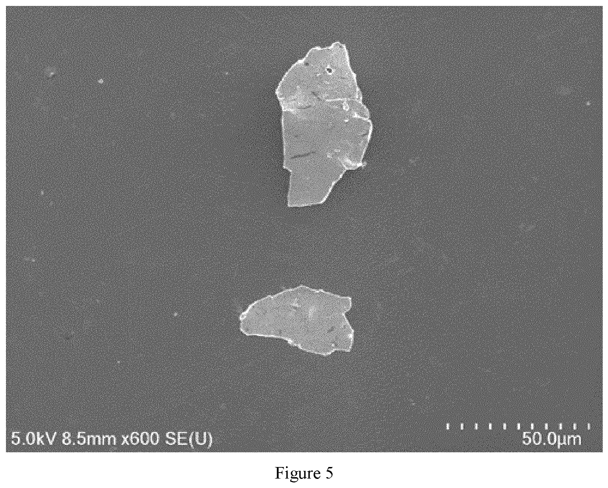

0.8 g of aluminum foil with a thickness of 630 nm was contacted with 26 g of white sugar, and the combination was poured into a wall-breaking machine, and crushed for 5 times, each time for 80 s with fruit and vegetable button. 40 ml of alcohol was added to dissolve the sugar, and the obtained suspension was crushed again with fruit and vegetable button for 5 times, each time for 120 s. The obtained suspension was poured into a suction filtration bottle, and was continuously filtered, washed, and dried to obtain a pure two-dimensional aluminum nanosheet, as shown in Figure 5. It can be seen from the two-dimensional aluminum nanosheet that when alcohol is selected as solvent, the surface of the aluminum sheet does not react with the solvent. The surface of the aluminum sheet retains the original morphology of the aluminum foil surface, and retains the characteristics of the original copper film in a flaky form, with an average lateral size of 40 µm.

### Example 5

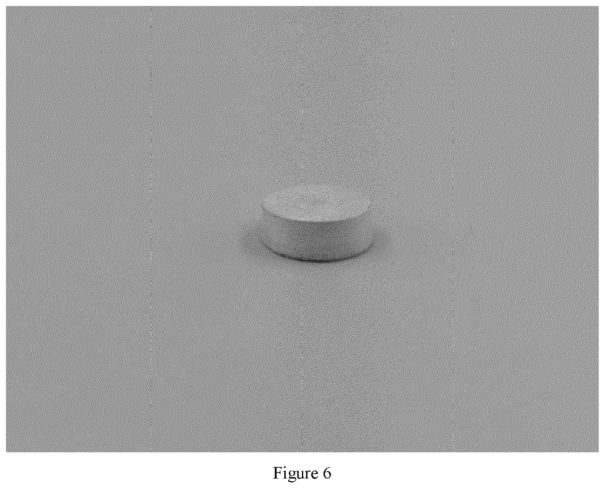

2.333 g of the silver flake powder in Example 2 was blended with 1 g of epoxy resin using a SpeeMixer for 10 min;
after adding the curing agent, the solid composite material was obtained by curing at 80 °C for 300 min, as shown in Figure 6; it can be seen that the obtained composite material is a cylindrical solid with uniform thickness and texture. The thermal conductivity measured by laser thermal conductivity meter is 15W.m⁻¹K⁻¹ when the volume fraction of silver is 18.6 vol%.

### Comparative Example 1

The silver flake powder in Example 5 was replaced with commercial silver powder of the same size and mass (20 µm silver powder purchased from Qinghe County Huiguang Metal Materials Co., Ltd.), and the rest was the same as Example 5 to obtain a solid composite material. The thermal conductivity measured by a laser thermal conductivity meter is 3 W.m⁻¹K⁻¹ when the volume fraction of silver was 18.6 vol%.

The above are only a few embodiments of the present application and do not constitute any form of limitation to the present application. Although the present application is disclosed as above with preferred embodiments, it is not intended to limit the present application. Any technician familiar with the profession, without departing from the scope of the technical solution of the present application, using the technical contents disclosed above to make slight changes or modifications are equivalent to equivalent implementation cases and fall within the scope of the technical solution.

## Claims

1. A method for preparing a two-dimensional metal nanosheet, including the following steps:
S1. a mixture containing a nano metal foil and an auxiliary substance is crushed to obtain a dispersion;
S2. after mixing a material containing the dispersion and a solvent, a solid-liquid separation is performed to obtain the two-dimensional metal nanosheet.

2. The preparation method according to claim 1, wherein in step S1, a thickness of the nano metal foil is in a range from 30 nm to 4000 nm.

3. The preparation method according to claim 1, wherein a thickness of the nano metal foil is in a range from 50 nm to 300 nm.

4. The preparation method according to any one of claims 1 to 3, wherein in step S1, the nano metal foil is at least one selected from gold foil, silver foil, copper foil and aluminum foil.

5. The preparation method according to any one of claims 1 to 4, wherein in step S1, the auxiliary substance is easily soluble and/or easily etched in a liquid environment.

6. The preparation method according to any one of claims 1 to 4, wherein in step S1, the auxiliary substance is a hard substrate or a brittle substance.

7. The preparation method according to any one of claims 1 to 4, wherein the auxiliary substance is at least one selected from sugar, salt and ceramic.

8. The preparation method according to any one of claims 1 to 4, wherein in step S1, a mass ratio of the nano metal foil to the auxiliary substance is in a range from 0.01 to 0.1.

9. The preparation method according to any one of claims 1 to 8, wherein in step S1, the crushing is carried out in a wall breaking machine, a mixer, or an ultrasonic machine.

10. The preparation method according to any one of claims 1 to 9, wherein the crushing conditions are as follows:
crushing power is in a range from 600 W to 1000 W;
crushing time is in a range from 20 min to 60 min.

11. The preparation method according to any one of claims 1 to 10, wherein in step S2, the solvent is at least one selected from water, ethanol, dimethyl sulfoxide, and acetone.

12. The preparation method according to any one of claims 1 to 11, wherein in step S2, the dispersion and the solvent are mixed and then crushed again.

13. A two-dimensional metal nanosheet obtained by the preparation method according to any one of claims 1 to 12, wherein a lateral size of the two-dimensional metal nanosheet is in a range from 2 µm to 100 µm.

14. A thermal interface material, including a two-dimensional metal nanosheet and a matrix; the two-dimensional metal nanosheet is selected from the two-dimensional metal nanosheet obtained by the preparation method according to any one of claims 1 to 12 and/or the two-dimensional metal nanosheet according to claim 13.

15. A method for preparing a thermal interface material, including the following steps:
the thermal interface material is obtained by blending a material containing a two-dimensional metal nanosheet and a matrix.

16. The preparation method according to claim 15, wherein the matrix is a polymer.

17. The preparation method according to claim 16, wherein the polymer is at least one selected from epoxy resin, silicone rubber and polyolefin.

18. The preparation method according to any one of claims 15 to 17, wherein a volume ratio of the two-dimensional metal nanosheet to the substrate is in a range from 15 to 25.

19. The preparation method according to any one of claims 15 to 18, wherein the blending conditions are as follows:
blending temperature is in a range from 60 °C to 100 °C;
blending time is in a range from 200 min to 400 min.

20. The preparation method according to any one of claims 15 to 19, wherein a curing agent is added after the two-dimensional metal nanosheet is blended with the polymer.
